# EUROPÄISCHE PATENTSCHRIFT

(11) **EP 0 910 150 B1**
(45) Veröffentlichungstag und Bekanntmachung des Hinweises auf die Patenterteilung: **12.12.2007**
(21) Anmeldenummer: 98119001.0
(22) Anmeldetag: 08.10.1998
(51) Int. Cl.: H02H 7/08, G05B 19/4062

(54) **Verfahren zur sicheren Überwachung der Regelbarkeit von Elektromotoren**
Method for safe monitoring of the controllability of electric motors
Méthode de surveillance de la fiabilité du réglage de moteurs électriques

(30) Priorität: 17.10.1997 DE 19746065
(43) Veröffentlichungstag der Anmeldung: 21.04.1999
(73) Patentinhaber: Dr. Johannes Heidenhain GmbH, 83292 Traunreut (DE)
(72) Erfinder: Kerner, Norbert Dipl.-Ing. (FH), 83374 Traunwalchen (DE); Stettner, Rudolf Dipl.-Ing. (FH), 83308 Trostberg (DE)

(56) Entgegenhaltungen:
- EP-A- 0 462 539
- EP-A- 0 791 872
- DE-A- 3 424 246
- DE-A- 4 000 348
- HILPERT ET AL.: "Sicherheitsaspekte moderner CNC-Systeme" ELEKTRONIK, Bd. 4, 26. Februar 1982 (1982-02-26), Seiten 47-52, XP000717175 München,DE

## Beschreibung

Die Erfindung betrifft ein Verfahren zur Überwachung der Regelbarkeit von Elektromotoren nach Anspruch 1.

Es ist bekannt, daß bei unterschiedlichsten Werkzeugmaschinen und Bearbeitungszentren zunehmend Sicherheitsfunktionen vorgesehen werden, die einen in der Regel eingeschränkten Betrieb, einen sicheren Halt oder sicheren Betriebshalt der jeweiligen Maschine auch bei einer Fehlfunktion einer oder mehrerer Baugruppen oder bei einer Fehlbedienung gewährleisten. Dadurch sollen Unfälle, bei denen das Werkstück, das Werkzeug oder die Maschine beschädigt oder sogar der Benutzer verletzt wird, zuverlässig verhindert werden. Diese Sicherheitsfunktionen werden zur Vermeidung kostspieliger zusätzlicher Anordnungen in die Steuereinheit der Maschine integriert.

Damit die Steuereinheit der Maschine sicher erkennen kann, wann eine Sicherheitsfunktion ausgeführt werden muß, werden die für die Sicherheit relevanten Funktionen und Parameter sicher überwacht. Dafür ist es erforderlich, daß zwei unabhängige Prozessoren die Überwachung gleichzeitig durchführen.

Dabei ist von Nachteil, daß nur die sichere Verarbeitung und Weiterleitung der von einem Elektromotor erhaltenen oder zu einem Elektromotor übertragenen Signale überwacht wird. Sollten im Elektromotor selbst Betriebszustände auftreten, die zu einem unsicheren Betriebszustand der Maschine führen, kann dies in der Steuereinheit nicht erkannt werden, da in diesem Fall keine fehlerhafte Verarbeitung oder Übertragung vorliegt.

Aus der EP-A-0462539 ist ein Verfahren gemäß dem Oberbegriff des Anspruchs 1 bekannt. Nachteilig dabei ist, dass dieses Verfahren erst aktiviert wird, wenn die Istposition von der Sollposition um einen vorgegebenen Wert abweicht. Um diese Prüfvoraussetzung zu ermitteln, muss die Sollposition zur Verfügung stehen.

Es stellt sich somit die Aufgabe, ein Verfahren und eine Schaltungsanordnung anzugeben, durch die eine Steuereinheit einer Werkzeugmaschine oder eines Roboters erkennen kann, ob die von der Steuereinheit geregelten Elektromotoren tatsächlich noch von der Steuereinheit geregelt werden können.

Diese Aufgabe wird durch die in Anspruch 1 angegebenen Merkmale gelöst.

Das erfindungsgemäße Verfahren weist den Vorteil auf, daß zusätzlich zur Überwachung der Übertragung und Ermittlung des Regelungssignals auch überwacht wird, ob der Elektromotor noch geregelt werden kann. Dadurch kann auch dann ein sicherer Betrieb gewährleistet werden, wenn in einem Elektromotor selbst ein Fehler auftritt, der dazu führt, daß der Elektromotor nicht mehr regelbar ist.

In einer vorteilhaften Ausgestaltung wird die Überwachung des Elektromotors zweikanalig und damit sicher durchgeführt.

Die Erfindung wird im folgenden anhand der in der Zeichnung dargestellten Ausführungsformen näher erläutert. Es zeigt:
- Fig. 1:: einen möglichen Programmablaufplan für das erfindungsgemäße Verfahren und
- Fig. 2:: eine mögliche Realisierungsform der erfindungsgemäßen Anordnung.

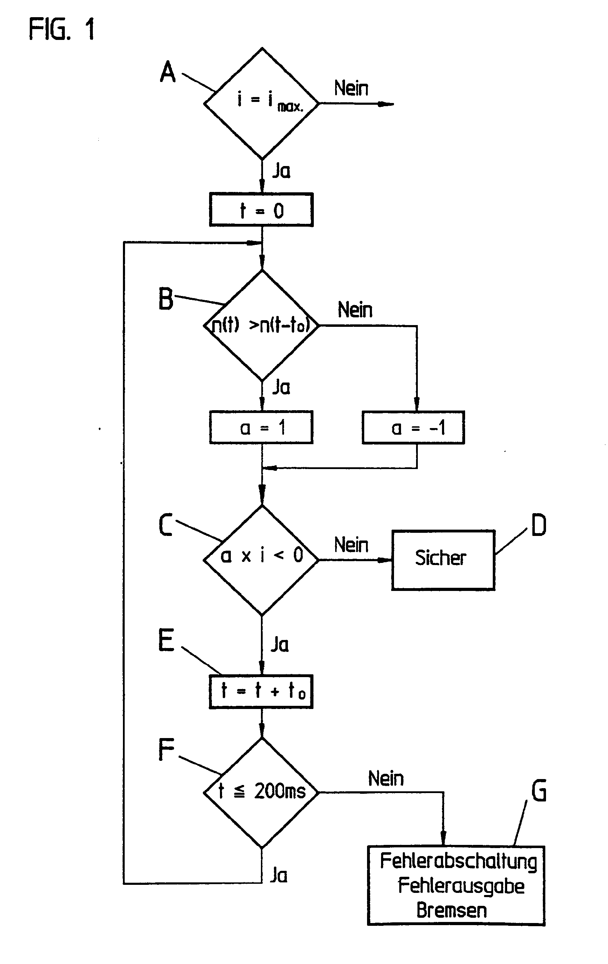

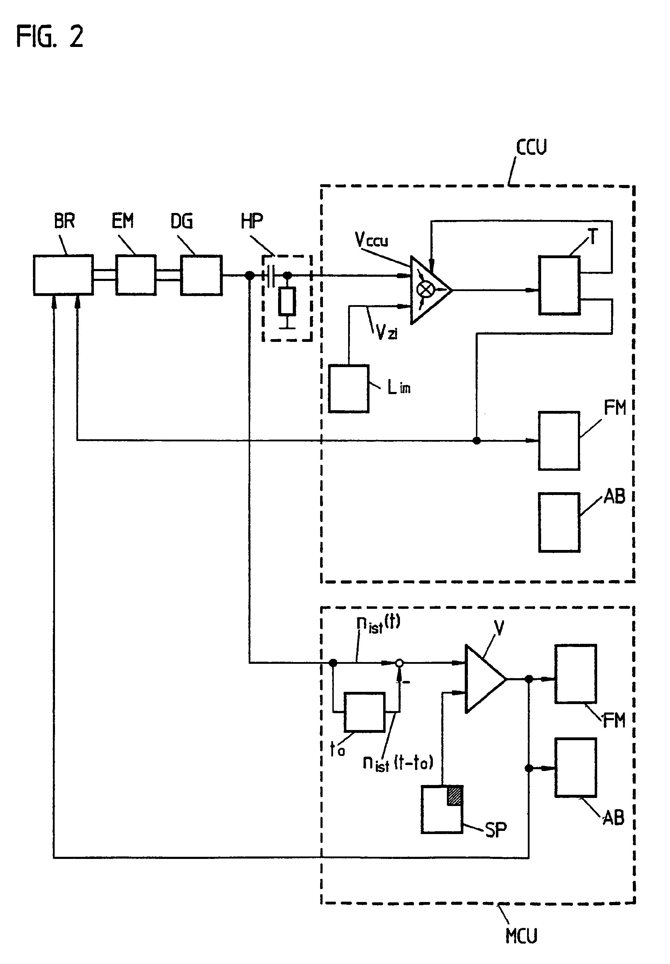

In Fig. 1 ist das erfindungsgemäße Verfahren dargestellt. Sobald im Rahmen der normalen Regelung des Momentenstroms des Elektromotors EM der für den Elektromotor EM maximal zulässige Momentenstrom in Schritt A erkannt wird, erfolgt eine Überprüfung der Regelbarkeit durch die in Fig. 2 dargestellten Baugruppen. Der zu überprüfende Elektromotor EM aus Fig. 2 ist mit einer Bremse BR und einem Drehgeber DG verbunden, dessen Ausgangssignal durch einen Hochpaß HP gefiltert und anschließend einem ersten Prozessor CCU zugeleitet wird. Durch die Hochpaßfilterung werden niederfrequente Signale, die keine Beschleunigungsinformation beinhalten, herausgefiltert. Durch Auswertung des hochpaßgefilterten Ausgangssignals des Drehgebers DG erkennt der erste Prozessor CCU in Schritt B, ob die Beschleunigung positiv oder negativ ist, d.h. ob der Elektromotor EM beschleunigt oder abgebremst wird.

Der erste Prozessor CCU beinhaltet bereits die Regelung für den Momentenstrom des Elektromotors EM, so daß dem ersten Prozessor CCU aufgrund der für die Regelung rückgekoppelten Istwerte für den Momentenstrom bekannt ist, welches Vorzeichen Vzi der Momentenstrom aufweist. Die beiden Vorzeichen von Momentenstrom und Beschleunigung der Drehzahl werden dann in einem Vergleicher Vccu in Schritt C verglichen und abhängig von dem Vergleichsergebnis erkannt, ob ein sicherer Betriebszustand vorliegt. Wenn die Vorzeichen von Momentenstrom und Beschleunigung übereinstimmen, liegt kein Fehler vor und der Elektromotor EM befindet sich in einem sicheren Betriebszustand in Schritt D. Der Vergleicher Vccu steuert dann die angeschlossenen Baugruppen nicht an.

Weisen aber Motorstrom und Beschleunigung unterschiedliches Vorzeichen auf, so wird durch das Ausgangssignal des Vergleichers Vccu ein Timer T in Schritt E gestartet und während der maximale Momentenstrom vorliegt wird überprüft, wie lange die Vorzeichen von Motorstrom und Beschleunigung unterschiedlich sind. Dabei kann auch der Fall eintreten, daß die Vorzeichen nur zeitweise übereinstimmen. In diesem Fall werden die Zeiträume mit unterschiedlichen Vorzeichen von Momentenstrom und Beschleunigung addiert.

Ist der derart ermittelte Zeitraum, in dem unterschiedliche Vorzeichen von Beschleunigung und Momentenstrom vorliegen, größer als ein im Timer T abgespeicherter Mindestwert, wird eine Fehlfunktion des Elektromotors EM in Schritt F erkannt und es erfolgt in Schritt G durch eine dafür vorgesehene Baugruppe AB eine Abschaltung des Motorstroms, durch eine weitere Baugruppe FM die Ausgabe einer Fehlermeldung und durch die mechanische Bremse BR wird der Elektromotor EM bis zum Stillstand abgebremst. Falls der ermittelte Zeitraum kleiner als der gespeicherte Mindestwert, von z.B. 200 ms, ist, wird keine Fehlfunktion erkannt. Sobald nicht mehr der maximale Momentenstrom vorliegt, wird die Summe der Zeiträume, zu denen unterschiedliches Vorzeichen von Beschleunigung und Momentenstrom vorlag wieder zu Null gesetzt.

In Fig. 2 sind nur die für die Erfindung relevanten Baugruppen einer erfindungsgemäßen Werkzeugmaschine dargestellt. Zur Vereinfachung wird im folgenden nur von einem Elektromotor EM ausgegangen, die erfindungsgemäße Überwachung erfolgt aber für alle Achsmotoren und den Spindelmotor einer beliebigen Werkzeugmaschine bzw. Roboter. Es ist der Elektromotor EM mit einem Drehgeber DG mechanisch verbunden, dessen Ausgangssignal einem Hochpaß HP zugeleitet wird. Dessen Ausgangssignal wird durch den Vergleicher Vccu mit dem Vorzeichen Vzi des Momentenstroms verglichen. Der Vergleicher Vccu wird vorteilhaft durch einen Multiplizierer realisiert, der das Ausgangssignal eines Strombegrenzers Lim mit dem Ausgangssignal des Hochpasses HP multipliziert. Der Strombegrenzer Lim gibt bei maximalem negativen Momentenstrom den Wert -1, bei maximalem positiven Momentenstrom den Wert1 und sonst den Wert 0 aus. Das Ausgangssignal des Vergleichers Vccu wird dem Timer T zugeleitet der die Zeiträume mit unterschiedlichen Vorzeichen von Momentenstrom und Beschleunigung, in denen vom Vergleicher -1 ausgegeben wird, addiert. Sobald für eine Mindestdauer unterschiedliche Vorzeichen vorliegen, wird durch den Timer T oder den Prozessor CCU Maßnahmen zur Herstellung eines sicheren Betriebszustands eingeleitet.

Da der erste Prozessor CCU wesentliche Funktionen für die Regelung des Motorstroms des Elektromotors EM beinhaltet, ist im ersten Prozessor CCU intern bekannt, welches Vorzeichen Vzi der Motorstrom für den Elektromotor EM aufweist. Daher kann alternativ dieses Vorzeichen in einer Vergleicherbaugruppe Vccu mit dem Vorzeichen der Beschleunigung verglichen werden und festgestellt werden, ob gleiches oder ungleiches Vorzeichen vorliegt. Liegt gleiches Vorzeichen vor, so ist der Betriebszustand sicher und es werden keine weiteren Maßnahmen ergriffen.

Ist das Vorzeichen aber ungleich, wird, wie bereits beschrieben, eine Timerbaugruppe T durch den Vergleicher Vccu aktiviert, die die Zeitdauer ermittelt, während der unterschiedliches Vorzeichen von Beschleunigung und Momentenstrom vorliegt. Die Timerbaugruppe T ist so lange aktiv, so lange maximaler Momentenstrom vorliegt. Während dieser Zeitdauer wird in der Vergleicherbaugruppe wiederholt überprüft, ob die ermittelte Zeitdauer bereits größer einem gespeicherten Schwellwert ist. Ist dies während maximaler Momentenstrom fließt nicht der Fall, wird wiederum ein sicherer Betriebszustand erkannt.

Unterscheiden sich die Vorzeichen der Beschleunigung und des Momentenstroms aber für einen längeren Zeitraum als der abgespeicherte Schwellwert, liegt ein Fehler vor und ein sicherer Betriebszustand kann nicht mehr gewährleistet werden.

Zur Herstellung eines sicheren Betriebszustands wird der Strom für den Elektromotor EM durch eine spezielle Baugruppe AB ausgeschaltet, an den Benutzer durch eine Baugruppe FM eine Fehlermeldung ausgegeben und der Elektromotor EM mittels einer mechanischen Bremse BR gebremst. Sobald der Elektromotor EM steht, liegt wieder ein sicherer Betriebszustand vor.

Um ein zweikanaliges Verfahren zu realisieren, und dadurch eine verbesserte Betriebssicherheit zu erreichen, wird von einem zweiten Prozessor MCU parallel und unabhängig vom ersten Prozessor CCU anhand eines anderen Kriteriums ebenfalls die Regelbarkeit des Elektromotors EM überprüft.

Sobald eine Stop-Funktion zum Stillsetzen mindestens eines Elektromotors EM der Werkzeugmaschine oder des Roboters mit maximalem Momentenstrom ausgeführt wird, wird automatisch die Regelbarkeit des Elektromotors EM durch den zweiten Prozessor MCU überwacht. Dann errechnet der zweite Prozessor MCU aus dem Ausgangssignal des Drehgebers DG die Geschwindigkeitsänderung des Elektromotors EM pro Zeiteinheit für mehrere Zeitpunkte. Anschließend wird die Differenz aufeinanderfolgender Werte mit einem Schwellwert für diese Differenz verglichen. Liegt der Betrag der Differenz über dem Schwellwert, und ist die Differenz negativ, erkennt der zweite Prozessor MCU einen sicheren Betriebszustand. Falls für einen Mindestzeitraum der Betrag der Differenz aber kleiner als der Schwellwert ist oder die Differenz positiv ist, erfolgt gar kein oder ein zu langsames Abbremsen des Elektromotors EM. Daher wird ein unsicherer Betriebszustand des Elektromotors EM durch den zweiten Prozessor MCU erkannt und der Motorstrom durch die Baugruppe AB ausgeschaltet, eine Fehlermeldung durch die Baugruppe FM an den Benutzer ausgegeben und der Elektromotor EM wird durch eine mechanische Bremse BR abgebremst.

Um dieses Verfahren zu realisieren wird der zweite Prozessor MCU mit dem an dem Elektromotor EM vorgesehenen Drehgeber DG verbunden. Die Ausgangssignale des Drehgebers DG werden dadurch auch dem zweiten Prozessor MCU zugeleitet. Dieser berechnet mehrmals aus aufeinander folgenden Ausgabewerten des Drehgebers DG die Differenz aus der in to um eine Taktperiode verzögerten Drehzahl und unverzögerter Drehzahl die Geschwindigkeitsänderung des Elektromotors EM für das Zeitintervall zwischen zwei aufeinander folgende Ausgabewerte des Drehgebers DG. Diese Geschwindigkeitsänderung muß bei einer Stop-Funktion einen möglichst großen negativen Wert aufweisen. Weiterhin ist in einem Speicher SP des zweiten Prozessors MCU ein Schwellwert gespeichert, um den sich die Drehzahl des Elektromotors EM bei einer fehlerfrei ausgeführten Stop-Funktion mindestens ändern muß. Dieser Schwellwert und der ermittelte Wert für die Geschwindigkeitsänderung werden einem Vergleicher V zugeleitet. Falls der Schwellwert für eine bestimmte Mindestdauer bzw. mehrere Drehzahlwerte betragsmäßig größer als der ermittelte Wert für die Geschwindigkeitsänderung ist, wird kein sicherer Betriebszustand erkannt und der Vergleicher V gibt ein erstes Signal aus. Dieses wird einer Baugruppe AB zum Abschalten des Motorstroms, einer Baugruppe FM zur Ausgabe einer Fehlermeldung an den Benutzer und einer mechanischen Bremse BR für den Elektromotor EM zugeleitet und aktiviert diese Baugruppen. Falls der ermittelte Wert für die Geschwindigkeitsänderung größer als der Schwellwert ist, gibt der Vergleicher V ein zweites Signal aus, das einen sicheren Betriebszustand signalisiert, und diese Baugruppen werden nicht aktiviert.

Dabei können die Baugruppe für den Vergleicher V, den Speicher SP, die Baugruppe AB zum Abschalten des Motorstroms, die Baugruppe FM zur Ausgabe einer Fehlermeldung sowohl diskret als auch integriert in den zweiten Prozessor MCU ausgeführt werden.

## Patentansprüche

1. Verfahren zur Überwachung der Regelbarkeit von Elektromotoren, insbesondere in Werkzeugmaschinen oder Robotern, bei dem ein Ausgangssignal eines Drehgebers (DG) von einem Prozessor (CCU) ausgewertet wird, indem aus dem Ausgangssignal des Drehgebers (DG) eine ansteigende oder abfallende Drehzahl des Elektromotors (EM) ermittelt wird und das Vorzeichen der Beschleunigung mit dem Vorzeichen des Momentenstroms verglichen wird, **dadurch gekennzeichnet, dass** durch den Prozessor (CCU) ein fehlerhafter Betriebszustand nur dann erkannt wird, wenn während des Auftretens eines maximal zulässigen Momentenstroms des Elektromotors (EM) für eine Mindestdauer entweder die Drehzahl ansteigt und gleichzeitig der dem Elektromotor (EM) zugeleitete Momentenstrom negativ ist oder die Drehzahl abfällt und gleichzeitig der dem Elektromotor (EM) zugeleitete Momentenstrom positiv ist, und dass Maßnahmen zur Herstellung eines sicheren Betriebszustands durchgeführt werden, wenn durch den Prozessor (CCU) ein fehlerhafter Betriebszustand erkannt wurde.

2. Verfahren nach Anspruch 1, **dadurch gekennzeichnet, dass** zusätzlich durch einen zweiten Prozessor (MCU) ein fehlerhafter Betriebszustand erkannt wird, wenn der Betrag der Drehzahländerung bei maximalem positiven oder maximalem negativen Momentenstrom einen Schwellwert unterschreitet und dass Maßnahmen zur Herstellung eines sicheren Betriebszustands durchgeführt werden, wenn durch den zweiten Prozessor (MCU) ein fehlerhafter Betriebszustand erkannt wurde.

3. Verfahren nach Anspruch 1 oder 2, **dadurch gekennzeichnet, dass** aus dem Ausgangssignal des Drehgebers (DG) eine ansteigende oder abfallende Drehzahl beziehungsweise eine positive oder negative Beschleunigung des Elektromotors (EM) ermittelt wird, indem zeitlich aufeinander folgende Ausgangssignale des Drehgebers (DG) miteinander verglichen werden.

4. Verfahren nach einem der Ansprüche 1 bis 3, **dadurch gekennzeichnet, daß** zur Herstellung eines sicheren Betriebszustands der Strom des Elektromotors (EM) ausgeschaltet, an den Benutzer eine Fehlermeldung ausgegeben und der Elektromotor (EM) abgebremst wird.

5. Verfahren nach einem der Ansprüche 1 bis 4, **dadurch gekennzeichnet, daß** das Ausgangssignal des Drehgebers (DG) durch einen Hochpaß (HP) gefiltert wird.

6. Verfahren nach einem der vorhergehenden Ansprüche, **dadurch gekennzeichnet, dass** in dem Zeitraum während der maximal zulässige Momentenstrom vorliegt die Vorzeichen der Beschleunigung und des Momentenstroms nur zeitweise übereinstimmen und diese Zeiträume mit unterschiedlichen Vorzeichen von Momentenstrom und Beschleunigung addiert werden.

## Claims

1. Method for monitoring the controllability of electric motors, in particular in machine tools or robots, in which an output signal of a rotary encoder (DG) is evaluated by a processor (CCU) by determining an increasing or decreasing speed of the electric motor (EM) from the output signal of the rotary encoder (DG) and comparing the preceding sign of the acceleration with the preceding sign of the moment current, **characterised in that** a defective operational state is only recognised by the processor (CCU) if, while a maximum permissible moment current of the electric motor (EM) occurs for a minimum period, either the speed increases and at the same time the moment current fed to the electric motor (EM) is negative or the speed decreases and at the same time the moment current fed to the electric motor (EM) is positive, and that measures for the creation of a safe operational state are conducted if a defective operational state has been recognised by the processor (CCU).

2. Method according to claim 1, **characterised in that** a defective operational state is recognised additionally by a second processor (MCU) when the amount of the speed change at maximum positive or maximum negative moment current does not reach a threshold value, and that measures for the creation of a safe operational state are conducted if a defective operational state has been recognised by the second processor (MCU).

3. Method according to claim 1 or 2, **characterised in that** an increasing or decreasing speed or a positive or negative acceleration of the electric motor (EM) is determined from the output signal of the rotary encoder (DG) by time-consecutive output signals of the rotary encoder (DG) being compared with one another.

4. Method according to one of claims 1 to 3, **characterised in that** to create a safe operational state, the current of the electric motor (EM) is switched off, an error message is emitted to the user and the electric motor (EM) is braked.

5. Method according to one of claims 1 to 4, **characterised in that** the output signal of the rotary encoder (DG) is filtered through a high-pass filter (HP).

6. Method according to one of the preceding claims, **characterised in that** in the time period while the maximum permissible moment current is present, the preceding sign of the acceleration and of the moment current are only intermittently the same and these time periods are added with different preceding signs of the moment current and acceleration.

## Revendications

1. Procédé de surveillance de la fiabilité de réglage de moteurs électriques, en particulier dans des machines-outils ou des robots, selon lequel un signal de sortie d'un codeur de rotation (DG) est traité par un processeur (CCU), en déterminant une vitesse de rotation croissante ou décroissante du moteur électrique (EM), à partir du signal de sortie du codeur (DG), et en comparant le signe de l'accélération avec le signe du courant de couple, **caractérisé en ce que** le processeur (CCU) ne détecte un état de fonctionnement défectueux que si, pendant l'apparition d'un courant de couple maximal admissible du moteur électrique (EM), soit la vitesse de rotation augmente pour une durée minimale et en même temps le courant de couple acheminé au moteur électrique (EM) est négatif, soit la vitesse diminue et en même temps le courant de couple acheminé au moteur (EM) est positif, et **en ce que** l'on prend des mesures pour établir un état de fonctionnement fiable, si le processeur (CCU) a détecté un état de fonctionnement défectueux.

2. Procédé selon la revendication 1, **caractérisé en ce qu'**en outre, un deuxième processeur (MCU) détecte un état de fonctionnement défectueux, si la valeur de la variation de vitesse passe en dessous d'une valeur seuil, en présence d'un courant de couple positif maximal ou négatif maximal, et **en ce que** l'on prend des mesures pour établir un état de fonctionnement fiable, si le deuxième processeur (MCU) a détecté un état de fonctionnement défectueux.

3. Procédé selon la revendication 1 ou 2, **caractérisé en ce que** l'on détermine, à partir du signal de sortie du codeur de rotation (DG), une vitesse croissante ou décroissante, respectivement une accélération positive ou négative du moteur électrique (EM), en comparant des signaux de sortie successifs dans le temps du codeur (DG).

4. Procédé selon une des revendications 1 à 3, **caractérisé en ce que** pour établir un état de fonctionnement fiable, le courant du moteur électrique (EM) est coupé, un message d'erreur est émis à l'intention de l'utilisateur et le moteur électrique (EM) est freiné.

5. Procédé selon une des revendications 1 à 4, **caractérisé en ce que** le signal de sortie du codeur (DG) est filtré par un filtre passe-haut (HP).

6. Procédé selon une des revendications précédentes, **caractérisé en ce que** pendant le laps de temps où le courant de couple maximal admissible est présent, les signes de l'accélération et du courant de couple ne coïncident que temporairement et que l'on additionne ces laps de temps où les signes du courant de couple et de l'accélération sont différents.
